(19) Europäisches Patentamt
European Patent Office
Office européen des brevets

(11) **EP 2 852 049 A1**

(12) **EUROPEAN PATENT APPLICATION**

(43) Date of publication:
**25.03.2015 Bulletin 2015/13**

(51) Int Cl.:
**H02P 25/08** (2006.01)    **H02H 7/093** (2006.01)

(21) Application number: **13184889.7**

(22) Date of filing: **18.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Danfoss Power Electronics A/S**
**6300 Gråsten (DK)**

(72) Inventor: **Laursen, Michael**
**6000 Kolding (DK)**

(74) Representative: **Whiting, Gary**
**Danfoss A/S**
**Intellectual Property Department**
**L25**
**Nordborgvej 81**
**6430 Nordborg (DK)**

(54) **Fault detection in synchronous reluctance machines and permanent magnet machines**

(57)    A method is described for detecting faults, such as a blocked rotor or a stalled motor, in a synchronous reluctance machine, a permanent magnet assisted synchronous reluctance machine or a salient-poled permanent magnet machine. The method relies on detecting the level of a defined harmonic of the motor frequency. If this harmonic is above a given threshold, then the existence of the fault is likely. In the case of a blocked rotor, the relevant harmonic is twice the operating frequency of the motor (for a 4-pole motor).

Fig. 1

**Description**

FI ELD OF THE INVENTI ON

The present invention relates to the detection of faults in synchronous reluctance machines, permanent magnet machines and the like. For example, the present invention can be used to detect a blocked rotor or to detect a stalled machine.

BACKGROUND OF THE I NVENTI ON

Many systems incorporating synchronous reluctance machines or permanent magnet machines are vulnerable to the rotor of the machine becoming blocked. This can occur, for example, if a conveyor belt is stuck or if a pump is blocked. To avoid having the machine running with a high current until a motor drive controlling the motor trips (which risks damaging the motor, the drive or both) a method for the detection of a blocked rotor is needed. Furthermore, some systems incorporating synchronous reluctance machines or permanent magnet machines are vulnerable to the motor stalling.

The present invention seeks to address one or more of the above-mentioned problems.

SUMMARY OF THE I NVENTI ON

The present invention provides a method of providing a signal to indicate a fault (such as a blocked rotor or a stalled motor) in a synchronous reluctance machine, a permanent magnet assisted synchronous reluctance machine or a salient-poled permanent magnet machine (the machine comprising a motor), the method comprising the steps of: measuring a motor operating current of the machine; calculating the harmonic component of the motor operating current at a determined multiple of the reference frequency at which the motor is being driven; and providing the signal indicating a fault in the event that the harmonic component is above a pre-determined threshold. The invention may include the step of determining the reference frequency at which the motor is being driven.

In many forms of the invention, the signal indicating a fault is provided only when the harmonic component is above the pre-determined threshold for more than a first defined period of time. In this way, a fault output is only given when the conditions indicating a probable fault (such as a blocked rotor or a stalled motor) are maintained over a period of time, thereby reducing the likelihood of false positives. The first defined period of time may be determined using a simple incrementing counter or a simple up/down counter.

In many forms of the invention, the harmonic component is calculated using a single-point discrete Fourier transform. This is a particularly convenient and simple method for calculating harmonic components. In alternative forms of the invention, the harmonic component is calculated using a Fast Fourier transform. A Fast Fourier transform may for example already be being calculated for another purpose. The skilled person will appreciate that any other suitable method for calculating the harmonic component could be used, such as a filter bank.

The motor operating current may be the stator reference frame current $i_{sx}$. The stator reference frame current $i_{sx}$ may be used as it often shows the biggest amplitude and is therefore easier to detect and less sensitive to noise than other alternatives. Alternatively, the current level used may be the current $i_{sy}$. The skilled person will appreciate that any other suitable current level could be used, such as the d-current or q-current. For three-phase machines, it is possible to measure all three motor phase currents or to measure two of the three phase currents and to estimate the third. From this data, the motor operating current can be determined. In alternative forms of the invention, a single current sensor solution (e.g. using one current sensor in the DC link) can be used to determine the phase currents. Again, this measurement can be used to determine the motor operating current.

In forms of the invention where the fault is a stalled motor, the determined multiple may be half the reference frequency at which the motor is being driven.

In forms of the invention where the fault is a blocked rotor, the determined multiple may be proportional to the number of pole pairs of the motor. For example, where the motor is a four-pole motor, the determined multiple may be twice the reference frequency at which the motor is being driven.

The present invention also provides a method of providing a signal to indicate a blocked rotor in a synchronous reluctance machine, a permanent magnet assisted synchronous reluctance machine or a salient-poled permanent magnet machine, the method comprising the steps of: if the frequency of operation is above a pre-determined threshold, providing the signal indicating a blocked rotor using the methods set out above; and if the frequency of operation is below a pre-determined threshold, providing the signal indicating a blocked rotor using a low-frequency operation method. This allows low-frequency method to be used even if not suitable at high frequencies. This may be advantageous as the low-frequency method may be much simpler than the high-frequency method. In addition, in some implementations, the high-frequency method may be usable at low-frequencies, but may not be particularly suited to low frequencies, due to time required to obtain sufficient data to be able to calculate the harmonic component.

The invention may include the step of determining the reference frequency at which the motor is being driven.

In many forms of the invention, the signal indicating a blocked rotor is provided only in the event that the motor has been operating in the current limit mode for more than a second defined period of time and the motor frequency has not been increasing for more than the second defined period of time. In this way, a blocked rotor output is only given when the conditions indicating a probably blocked rotor are maintained over a period of time, thereby reducing the likelihood of false positives. The second defined period of time may be determined using a simple incrementing counter or a simple up/down counter.

In forms of the invention including a low-frequency operating method, that low-frequency operating method may comprise: determining whether the motor is operating in a current limit (or torque limit) mode; determining whether the motor frequency is increasing; and providing the signal indicating a blocked rotor in the event that the motor is operating in the current limit mode and the motor frequency is not increasing.

Some blocked rotor detection algorithms use the level of current driving the motor to determine whether the motor has a blocked rotor. If the current level is beyond a pre-determined current limit, this indicates there is a blocked rotor. However, at high operating frequencies the motor will have a high impedance, with the result that the current limit may never be reached. By using the harmonic detection method described above, a blocked rotor can be detected, even at high operating frequencies.

The present invention may include reducing the frequency at which the motor is being drive in response to a signal indicating a fault (such as a blocked rotor or a stalled motor). The supply of power may be reduced to prevent damage to the machine, but lower supply of power may continue to be provided to allow the machine to restart if the rotor is no longer blocked (in the case of a blocked rotor fault) or to allow the machine to restart following a stalled motor fault. Alternatively, supply of power may be stopped entirely.

The motor controller may control the motor according to a voltage vector control algorithm, but other suitable control could be used, such as a d-q flux control algorithm.

The present invention also provides a synchronous reluctance machine, a permanent magnet assisted synchronous reluctance machine or a salient-poled permanent magnet machine, comprising a motor having a rotor and a motor controller that controls the motor, wherein the motor controller is arranged to control the motor using the method as set out above.

The present invention also provides a method of providing a signal to indicate a blocked rotor in a synchronous reluctance machine, a permanent magnet assisted synchronous reluctance machine or a salient-poled permanent magnet machine, the method comprising the steps of: measuring a motor operating current of the machine; calculating the harmonic component of the motor operating current at a determined multiple of the reference frequency at which the motor is being driven; and providing the signal indicating a blocked rotor in the event that the harmonic component is above a pre-determined threshold. The invention may include the step of determining the reference frequency at which the motor is being driven.

The present invention yet further provides a method of providing a signal to indicate a stalled motor of a synchronous reluctance machine, a permanent magnet assisted synchronous reluctance machine or a salient-poled permanent magnet machine, the method comprising the steps of: measuring a motor operating current of the machine; calculating the harmonic component of the measured current level at half the reference frequency at which the motor is being driven; and providing a signal indicating that the motor has stalled in the event that the harmonic component is above a pre-determined threshold. The method may include determining the reference frequency at which the motor is being driven.

The present invention also provides a synchronous reluctance machine, a permanent magnet assisted synchronous reluctance machine or a salient-poled permanent magnet machine, comprising a motor having a rotor and a motor controller that controls the motor, wherein the motor controller is arranged to control the motor using the method as set out above.

BRI EF DESCRI PTI ON OF THE DRAWINGS

The invention will now be described in further detail with reference to the following schematic drawings, in which:

Figure 1 is a block diagram of a system in accordance with an aspect of the present invention;
Figure 2 is a flow chart showing an algorithm in accordance with an aspect of the present invention;
Figure 3 is a flow chart showing an exemplary low-speed blocked rotor detection algorithm in accordance with an aspect of the present invention;
Figure 4 is a flow chart showing a highly schematic exemplary high-speed blocked rotor detection algorithm in accordance with an aspect of the present invention;
Figure 5 is a flow chart showing a more detailed exemplary blocked rotor detection algorithm in accordance with an aspect of the present invention; and
Figure 6 is a vector plot of various angles used in the present invention.

D ETAI LED D ESCRI PTI ON OF THE I NVENTI ON

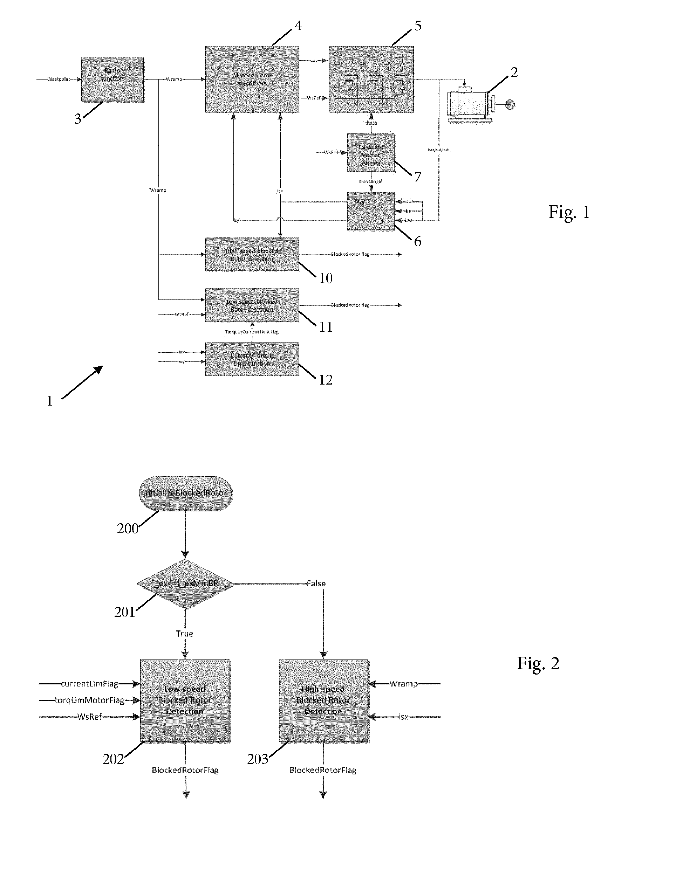

A simplified block diagram of control system for a synchronous reluctance machine, indicated generally by the reference numeral 1, is shown in Figure 1 . The system 1 comprises a 3-phase synchronous reluctance motor 2, which is driven by a motor controller based on a conventional voltage vector control (VVC+) system. The skilled person will appreciate that the block diagram has been significantly simplified for clarity.

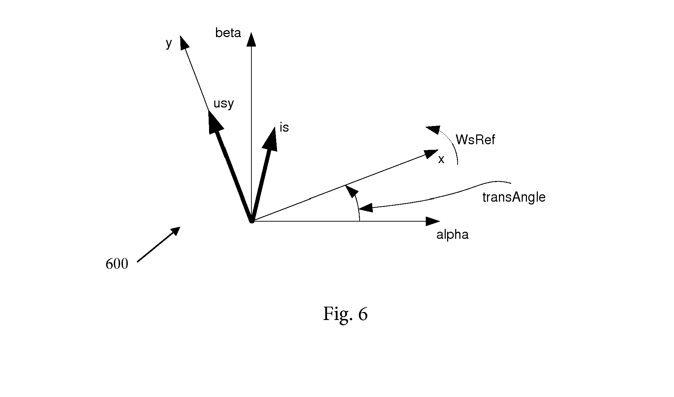

As with a conventional voltage vector control (VVC+) system, the motor controller is supplied with a reference frequency $\omega_{ramp}$ from a ram p function 3. The input power supply is passed to a control module 4 of the motor controller, which implements a motor control algorithm to drive the motor 2 by means of an inverter circuit 5. The inverter circuit 5 takes a current input and control signal from the control module 4, and in accordance with the control signal uses the current input to produce a pseudo-alternating-current supply, which drives the motor 2. An analysis module 6 monitors the three current supplies ($i_{su}$ $i_{sv}$, $i_{sw}$) to the motor 2 and converts them into the x-y domain to provide current signals $i_{sx}$ and $is_y$. These reference frame currents are used by the algorithm implemented by the control module 4 when controlling the motor 2 and are described below with reference to Figure 6.

Figure 6 is a plot, indicated generally by the reference numeral 600, showing the relationship between different reference schemes used in the present invention.

In Figure 6, the x-y-system represents the coordinate system of the rotating magnetic field that is created by the stator of the electric motor 2. The x-y-system will rotate with the rotating frequency $\omega$sRef

Figure 6 also shows the alpha-beta co-ordinate system, which is related to the x-y system by the equations given below.

The transAngle is the angle between the x-axis of the x-y system and the alpha axis of the alpha-beta system and is defined as follows:

$$transAngle = transAngle\_Old + \mathrm{WsRef} \cdot Ts$$

Where Ts is sample time and WsRef is the reference frequency to the PWM block.

The alpha- and beta-currents are defined as follows:

$$isa = isu - 0.5 \cdot (isv + isw)$$

$$isb = \frac{\sqrt{3} \cdot (\mathrm{isv} - \mathrm{isw})}{2}$$

$$isx = isa \cdot \cos(transAngle) + isb \cdot \sin(transAngle)$$

$$isy = isb \cdot \cos(transAngle) - isa \cdot \sin(transAngle)$$

Where $i_{su}$, $i_{sv}$ and $i_{sw}$ are the three motor phase currents, $i_{sa}$ is alpha-current, $i_{sb}$ is beta-current, $i_{sx}$ is the x-axis current and $i_{sy}$ is the y-axis current.

In addition to the conventional voltage vector control (VVC+) system features described above, the motor controller comprises a high-frequency (i.e. high speed) blocked rotor detection module 10 that implements a high-frequency algorithm to determine if the motor 2 has a blocked rotor, and a low-frequency (i.e. low speed) blocked rotor detection module 11 that implements a low-frequency algorithm to determine if the motor 2 has a blocked rotor. The high-frequency blocked rotor detection module 10 and low-frequency blocked rotor detection module 11 are described in more detail below. The low-frequency blocked rotor detection module 11 receives an input from a current/torque limit function 12 as described further below.

The control module 4 will periodically call a function initializeBlockedRotor to determine whether the motor 2 has a blocked rotor. Figure 2 is a flow chart showing the basic outline of the algorithm used by the function initialize-BlockedRotor.

First, the function is initiated by the control module 4 (step 200). Next, the reference frequency f_ex of the motor 2, in other words the speed at which the control module 4 intends that the motor 2 should be running, is compared to a pre-determined threshold frequency f_exMinBR (step 201). If the reference frequency is less than or equal to the pre-determined frequency, the low-frequency blocked rotor detection module 11 is used to determine whether the motor 2 has a blocked rotor (step 202). If on the other hand the reference frequency is above the pre-determined frequency, the high-frequency blocked rotor detection module 10 is used to determine whether the motor 2 has a blocked rotor (step 203).

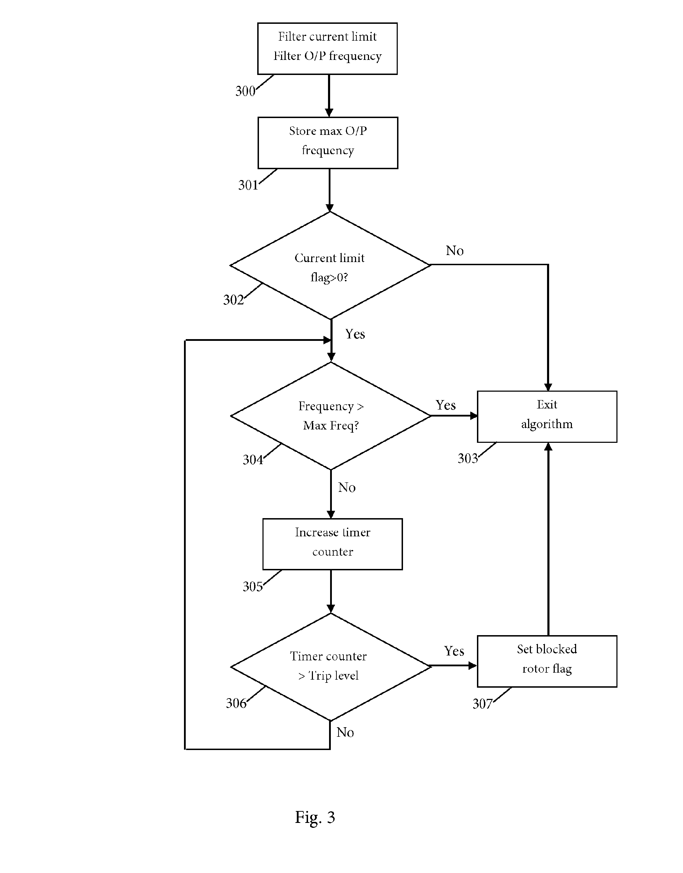

Figure 3 is a flowchart showing the low-frequency algorithm implemented by the low-frequency blocked rotor detection module 11 to determine if the motor 2 has a blocked rotor (thereby implementing the step 202 of the algorithm shown in Figure 2). In essence, the low-frequency algorithm deems that there is a blocked rotor if the motor is being driven in a current limit mode (i.e. the control module 4 is intentionally limiting the current driving the motor to a particular current), but the operating frequency of the motor 2 (in other words the actual frequency at which the motor is running) is not increasing.

First, the operating frequency of the motor 2, and any current limit (or torque limit), are determined (step 300). Next, the maximum operating frequency of the motor 2 is stored (step 301). It is then determined whether there is a current limit, i.e. whether the motor is being driven in a current limit mode (step 302). If there is no current limit, it is assumed that the rotor is not blocked, and the algorithm is exited (step 303).

If there is a current limit, the operating frequency of the motor 2 at the current time is compared with the stored maximum operating frequency (step 304). If the current operating frequency is larger than the stored maximum operating frequency it is again assumed that the rotor is not blocked, and the algorithm is exited (step 303).

If the current operating frequency is less than or equal to the stored maximum operating frequency, a timer counter is incremented (step 305). The timer counter is then compared to a pre-determined trip level (step 306). If it is determined that the timer counter is less than the pre-determined trip level, the step of comparing the operating frequency to the stored maximum operating frequency and following steps are repeated (steps 304 onwards). If on the other hand the timer counter is greater than the pre-determined trip level, it is assumed that there is a blocked rotor, the blocked rotor flag is set (step 307), and the algorithm is exited (step 303).

In this way, if the motor is being driven in a current limit mode, but nevertheless the operating frequency of the motor is found to not be increasing, the low-frequency blocked rotor detection module 11 determines that the motor 2 has a blocked rotor.

It should be noted that it is possible for the current limit mode to be entered during the normal operation of the motor 2 (for example due to motor inertia). Accordingly, it does not follow that entering the current limit mode is indicative of a blocked rotor. Rather, it is the combination of the current limit mode and the failure of the operating frequency to increase that is indicative of a blocked rotor.

As the operating frequency of the motor 2 increases, so does the impedance of the motor caused by inductance. As a consequence, at higher operating frequencies a current limit is unlikely to be reached, making the low-frequency algorithm of the low-frequency blocked rotor detection module 11 ineffective (because a rotor of the motor 2 could be blocked without the current limit condition ever occurring, meaning the algorithm would always exit without indicating that there was a blocked rotor). For this reason, at higher frequencies, the high-frequency blocked rotor detection module 10 is used to determine whether the motor 2 has a blocked rotor.

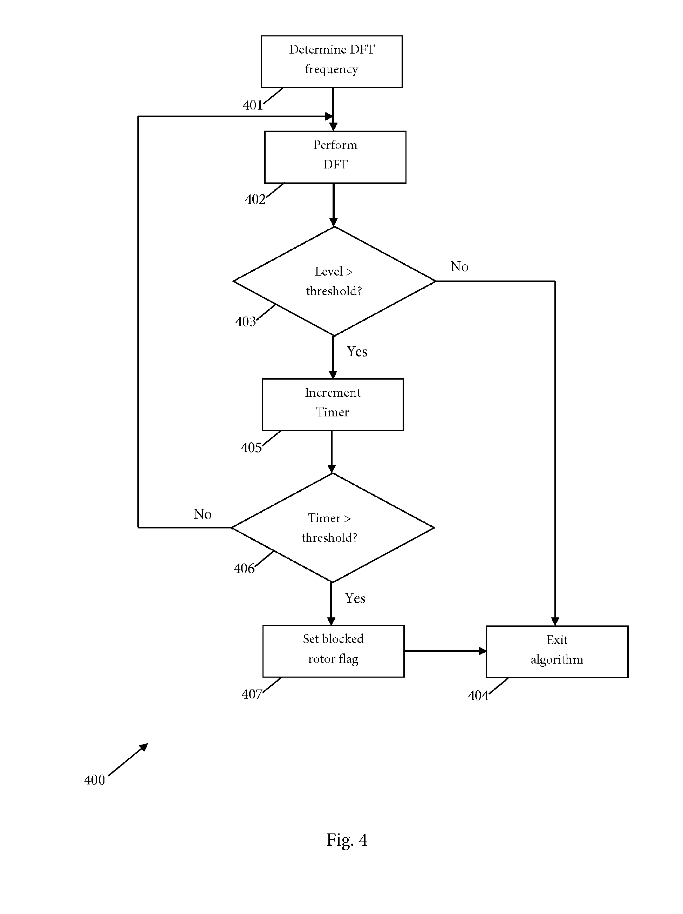

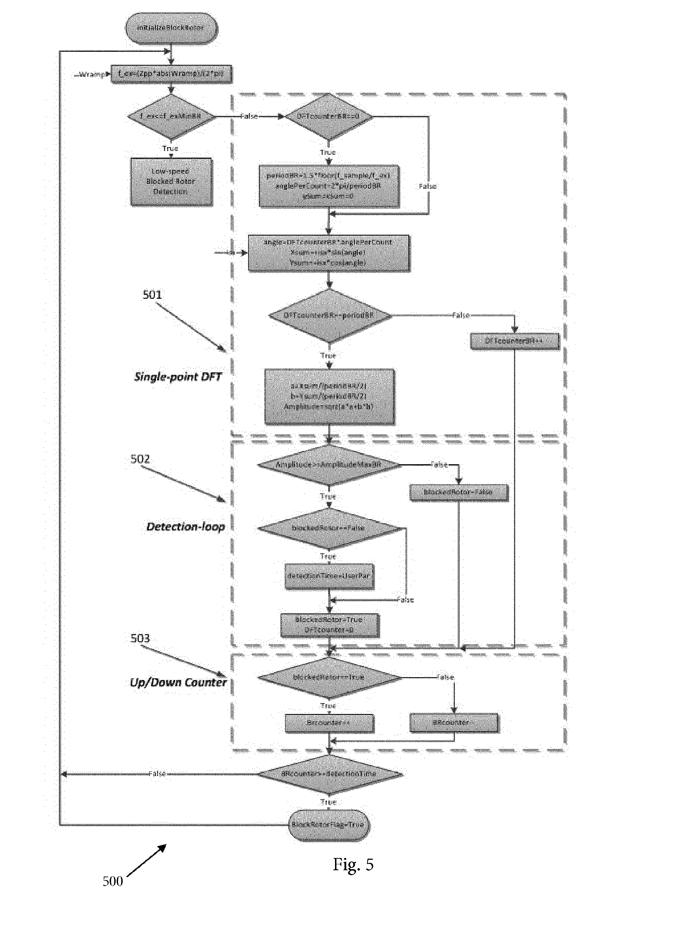

Figure 4 is a flow chart, indicated generally by the reference numeral 400, showing a highly schematic high-speed blocked rotor detection algorithm in accordance with an aspect of the present invention. Figure 5 (described in detail below) shows more details of an exemplary implementation of the algorithm 400.

The algorithm 400 seeks to determine if the motor 2 has a blocked rotor, thereby implementing the step 203 of the algorithm shown in Figure 2).

The algorithm 400 starts at step 401, where the DFT frequency is determined. The DFT frequency is a multiple of the reference frequency $\omega_{ramp}$ and is dependent on the number of poles of the motor. Next, at step 402, a discrete Fourier transform (DFT) is performed on the stator reference frame current is$_x$ at the determined DFT frequency.

At step 403, it is determined whether the output of the DFT is above a threshold. If not, then it is determined that the rotor is not blocked and the algorithm terminates at step 404. If the output of the DFT is above the threshold, then it is determined that the rotor might be blocked. In this instance, the algorithm moves to step 405 where a timer is incremented.

With the timer incremented, the algorithm moves to step 406 where it is determined whether the timer is above a threshold. If not, the algorithm 400 returns to step 402 where an additional DFT calculation is made. If the timer is above the threshold, this indicates that the DFT algorithm has repeatedly output a signal indicative of a potentially blocked rotor and it is therefore determined that the rotor is blocked. Thus, the blocked rotor flag is set (step 407) and the algorithm then terminates at step 404.

For a 4-pole machine, the high-frequency algorithm determines the second harmonic component of the motor current, where the harmonic components are based upon the reference frequency $\omega_{ramp}$, and deems that there is a blocked rotor if it determines that second harmonic component is above a pre-determined threshold. (So for example, if the reference frequency is 25Hz, the 50Hz harmonic component of the motor current is determined (for a 4-pole machine) and compared to the threshold.) The motor current used is the stator reference frame current $is_x$. The second harmonic component is determined using a single-point discrete Fourier transform (DFT). In this way, the high-frequency algorithm uses the second harmonic component to determine if there is a blocked rotor. This is effective as it has been determined that under normal operating conditions the second harmonic component will be approximately zero, but is high when there is a blocked rotor.

As indicated above, for a 4-pole machine, the high-frequency algorithm determines the second harmonic component of the motor current. If the machine has a different number of poles, then the harmonic component that is detected by the DFT algorithm needs to be changed. Thus, for an 8-pole machine, the high-frequency algorithm determines the fourth harmonic component of the motor current.

While the high-frequency algorithm can be performed when the motor 2 is operating at any (non-zero) frequency and will successfully detect a blocked rotor, at low frequencies the time taken for the high-frequency algorithm to operate is larger than that required by the low-frequency algorithm. This is because the time that is required to obtain the necessary measurements on which the DFT is performed is larger at lower frequencies. For this reason, the low-frequency algorithm is used when the motor 2 is operating below a pre-determined frequency.

Figure 5 is a flow chart, indicated generally by the reference numeral 500, showing a more detailed exemplary blocked rotor algorithm in accordance with an embodiment of the present invention.

The algorithm 500 starts by using the reference frequency Wramp to determine whether the high-speed or the low-speed algorithm should be used. The frequency variable f_ex is calculated as follows:

$$f\_ex = (Zpp\,\frac{abs(Wramp)}{2\pi})$$

Zpp is the number of pole pairs in the motor so that, for example, for a 4-pole motor, the frequency f_ex is double the reference frequency.

Next, it is determined whether the frequency variable f_ex is above or below a defined level. If the frequency variable f_ex is below (or equal to) the defined level, then a low speed algorithm (such as the low speed algorithm described above) is used. If above, then a high speed algorithm is used.

The high-frequency algorithm shown in Figure 5 has three main parts, namely a single-point DFT 501, a detection-loop 502 and an Up/Down counter 503.

The single-point DFT algorithm 501 uses the variable DFTcounterBR to decide if a new period has to be calculated and to decide if one period is completed. If the variable DFTcounterBR is zero, then a new period (periodBR) and the variable anglePerCount (angle per count) that are used for the DFT are calculated. When the DFTcounterBR is equal to the periodBR the DFT is completed and the harmonic (the frequency of interest) amplitude of the $i_{sx}$-current is calculated (amplitude).

The amplitude calculated in the single point DFT algorithm 501 is now used in detection loop 502 to decide if the rotor is blocked. If the amplitude is higher than a predefined value AmplitudeMaxBR (such as 5% of nominal motor current), then the variable blockedRotor is set to true, otherwise the variable blockedRotor is set to false. In addition, if the variable blockedRotor was previously false and is changed to true, then the detection time (detectionTime) is also set.

With the detection loop 502 complete, the algorithm 500 moves to the up/down counter 503. The up/down counter either increments a variable BRcounter (in the event that the variable blockedRotor is true) or decrements the variable BRcounter (in the event that the variable blockedRotor is false).

Finally, the algorithm 500 determines whether the variable BRcounter is equal to or greater that the variable detectionTime. If so, it is determined that the rotor is blocked and the blocked rotor flag is set. If not, it is determined that the rotor is not blocked.

The principles of the invention can also be applied to detecting other faults. For example, the principle of looking for a specific frequency can also be applied to detecting whether a motor has stalled.

When looking for a stalled motor, the frequency of interest is not double the motor frequency (as with the blocked rotor algorithm described above). Instead, the relevant frequency ($f_{stall}$) is ωramp/(2*pi). In this embodiment, the $i_{sy}$ current is analysed.

The embodiments of the invention described above are provided by way of example only. The skilled person will be aware of many modifications, changes and substitutions that could be made without departing from the scope of the present invention. The claims of the present invention are intended to cover all such modifications, changes and substitutions as fall within the spirit and scope of the invention.

**Claims**

1. A method of providing a signal to indicate a fault in a synchronous reluctance machine, a permanent magnet assisted synchronous reluctance machine or a salient-poled permanent magnet machine, the method comprising the steps of:

   measuring a motor operating current of the machine;
   calculating the harmonic component of the motor operating current at a determined multiple of the reference frequency at which the motor is being driven; and
   providing the signal indicating a fault in the event that the harmonic component is above a pre-determined threshold.

2. A method as claimed in claim 1, wherein the signal indicating a fault is provided only when the harmonic component is above the pre-determined threshold for more than a first defined period of time.

3. A method as claimed in claim 1 or claim 2, wherein the harmonic component is calculated using a single-point discrete Fourier transform.

4. A method as claimed in claim 1 or claim 2, wherein the harmonic component is calculated using a Fast Fourier transform.

5. A method as claimed in any preceding claim, wherein the motor operating current is the stator reference frame current $i_{sx}$.

6. A method as claimed in any preceding claim, wherein the fault is a blocked rotor.

7. A method as claimed in claim 6, wherein the determined multiple of the reference frequency at which the motor is being driven is proportional to the number of pole pairs of the motor.

8. A method as claimed in claim 6 or claim 7, wherein the motor is a four-pole motor and wherein the determined multiple is twice the reference frequency at which the motor is being driven.

9. A method as claimed in any one of claims 1 to 5, wherein the fault is a stalled motor and wherein the determined multiple is half the reference frequency at which the motor is being driven.

10. A method of providing a signal to indicate a blocked rotor in a synchronous reluctance machine, a permanent magnet assisted synchronous reluctance machine or a salient-poled permanent magnet machine, the method comprising the steps of:

    if the frequency of operation is above a pre-determined threshold, providing the signal indicating a blocked rotor using the method claimed in any one of claims 1 to 8; and
    if the frequency of operation is below a pre-determined threshold, providing the signal indicating a blocked rotor using a low-frequency operation method.

11. A method as claimed in claim 10, wherein the low-frequency operating method comprises:

    determining whether the motor is operating in a current limit mode;
    determining whether the motor frequency is increasing; and
    providing the signal indicating a blocked rotor in the event that the motor is operating in the current limit mode and the motor frequency is not increasing.

12. A method as claimed in claim 11, wherein the signal indicating a blocked rotor is provided only in the event that the motor has been operating in the current limit mode for more than a second defined period of time and the motor frequency has not increased for more than the second defined period of time.

13. A method as claimed in any preceding claim, further comprising determining the frequency of operation of the motor.

14. A method as claimed in any preceding claim, wherein, in response to the signal indicating a fault, the reference frequency at which the motor is being driven is reduced.

**15.** A synchronous reluctance machine, a permanent magnet assisted synchronous reluctance machine or a salient-poled permanent magnet machine, comprising a motor having a rotor and a motor controller that controls the motor, wherein the motor controller is arranged to control the motor using the method of any preceding claim.

Fig. 1

Fig. 2

```
        ┌─────────────────────┐
        │  Filter current limit│
        │  Filter O/P frequency│
        └─────────────────────┘
    300↗         │
                 ▼
        ┌─────────────────────┐
        │    Store max O/P     │
        │     frequency        │
        └─────────────────────┘
    301↗         │
                 ▼
            ╱╲        No
      ╱─────────────╲──────────────────────────┐
     ╱ Current limit  ╲                         │
     ╲   flag>0?      ╱                         │
      ╲─────────────╱                           │
  302↗      │ Yes                               │
            │                                   │
   ┌────────▼─────┐                             │
   │        │                                   │
   │       ╱╲         Yes        ┌──────────────▼──┐
   │  ╱──────────╲───────────────│      Exit       │
   │ ╱ Frequency >  ╲            │   algorithm     │
   │ ╲  Max Freq?    ╱           └─────────────────┘
   │  ╲──────────╱            303↗        ▲
   │304↗   │ No                           │
   │       │                              │
   │ ┌─────▼──────┐                       │
   │ │Increase timer│                     │
   │ │  counter    │                      │
   │ └─────────────┘                      │
   │305↗   │                              │
   │       ▼                              │
   │      ╱╲         Yes    ┌─────────────┴──┐
   │ ╱──────────╲───────────│ Set blocked    │
   │╱ Timer counter ╲       │  rotor flag    │
   │╲  > Trip level  ╱      └────────────────┘
   │ ╲──────────╱        307↗
   │306↗  │ No
   └──────┘
```

Fig. 3

Determine DFT
frequency
401

Perform
DFT
402

threshold?
403

No

Yes

Increment
Timer
405

Timer >
threshold?
406

No

Yes

Set blocked
rotor flag
407

Exit
algorithm
404

400

Fig. 4

Fig. 5

Fig. 6

Europäisches
Patentamt

European
Patent Office

Office européen
des brevets

**EUROPEAN SEARCH REPORT**

Application Number

EP 13 18 4889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 760 875 A1 (PROTRONIC N V [BE]) 7 March 2007 (2007-03-07) | 1,2,5-15 | INV. H02P25/08 H02H7/093 |
| Y | * paragraph [0040] * | 3,4 | |
| X | US 6 611 072 B1 (ELLERTHORPE SCOTT [US] ET AL) 26 August 2003 (2003-08-26) | 1,2,5-15 | |
| Y | * abstract * <br> * paragraph [0006] - paragraph [0012] * <br> * paragraph [0026] - paragraph [0029] * <br> * paragraph [0047] - paragraph [0051] * <br> * figures 1, 2, 7 * | 3,4 | |
| Y | US 2010/139403 A1 (LIANG MING [CA] ET AL) 10 June 2010 (2010-06-10) | 3,4 | |
| A | * paragraph [0012] * <br> * paragraph [0027] - paragraph [0029] * <br> * paragraphs [0054], [0059], [0060] * <br> * paragraphs [0083], [0084] * <br> * figures 4, 5, 18 * | 1,2,5-15 | |
| A | EP 2 194 641 A1 (BAUMUELLER NUERNBERG GMBH [DE]) 9 June 2010 (2010-06-09) * paragraphs [0002], [0004], [0007], [0011] * | 1-15 | TECHNICAL FIELDS SEARCHED (IPC) <br> H02P <br> H02H |

The present search report has been drawn up for all claims

| Place of search | Date of completion of the search | Examiner |
|---|---|---|
| Munich | 19 March 2014 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 18 4889

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2014

| Patent document cited in search report | | | Publication date | Patent family member(s) | | | Publication date |
|---|---|---|---|---|---|---|---|
| EP 1760875 | A1 | | 07-03-2007 | NONE | | | |
| US 6611072 | B1 | | 26-08-2003 | US<br>US | 6611072<br>2004032231 | B1<br>A1 | 26-08-2003<br>19-02-2004 |
| US 2010139403 | A1 | | 10-06-2010 | CA<br>US | 2687785<br>2010139403 | A1<br>A1 | 04-06-2010<br>10-06-2010 |
| EP 2194641 | A1 | | 09-06-2010 | AT<br>EP | 525796<br>2194641 | T<br>A1 | 15-10-2011<br>09-06-2010 |

EPO FORM P0459

For more details about this annex : see Official Journal of the European Patent Office, No. 12/82